# EUROPEAN PATENT APPLICATION

(11) **EP 4 727 258 A1**
(43) Date of publication of application: **15.04.2026**
(21) Application number: 24223307.0
(22) Date of filing: 26.12.2024
(51) Int. Cl.: H05B 1/02, H05B 3/26, H01Q 1/02, H01Q 1/32, G01S 13/931

(54) **RADAR HEATING COVER WITH BIMETALLIC STRIP OVERHEAT PROTECTOR AND AUTOMOBILE**

(30) Priority: 12.10.2024 CN 202411420846; 12.10.2024 CN 202422463599 U
(71) Applicant: Yanfeng Plastic Omnium Automotive Exterior Systems Co., Ltd., Shanghai 201821 (CN); Yanfeng Plastic Omnium (Shenyang) Automotive Exterior Systems Co., Ltd., Shenyang, Liaoning 110027 (CN); OPmobility SE, 69007 Lyon (FR)
(72) Inventor: CAI, Yuanhai, SHANGHAI, 201821 (CN); TANG, Fengfeng, SHANGHAI, 201821 (CN); LI, Xiang, SHANGHAI, 201821 (CN)
(74) Representative: LLR

(57) **Abstract**

The present application provides a radar heating cover and an automobile. The radar heating cover comprises a radar cover (1) and a heating assembly; the heating assembly comprises a heating wire (2), a film (3) and a bimetallic strip overheat protector (5); the heating wire (2) is fitted into the film (3); the bimetallic strip overheat protector (5) is connected in series in a heating circuit of the heating wire (2); the heating assembly is fitted onto the radar cover (1). The automobile comprises the radar heating cover assembled on a body of the automobile.

## Description

### Technical Filed

The present invention relates to the technical field of automobiles, and in particular to a radar heating cover with a bimetallic strip overheat protector and an automobile.

### Background of the Invention

As the level of automotive intelligence continues to improve, the number of intelligent radars installed on vehicles also continues to increase. The radars are concealed behind the covers or cover panels, and in cold regions and weather, it is crucial to ensure that the radar cover surface is free of ice and snow which would affect the radar's functionality. Therefore, the radar cover surface needs to be equipped with a heating function.

In the prior art, some covers do not have overheat protection. For example, the radar heating cover structure and production method disclosed in CN1 10635240A can use a heating wire for deicing and defrosting, but it does not consider overheat protection, which could lead to component damage. By contrast, some covers with overheat protection typically use a circuit board that is insert injection molded around a heating wire to control temperature, or add a temperature sensor to feed the temperature back to the vehicle ECU for on/off control. For instance, the radar heating cover with overheat protection disclosed in CN219016569U is connected to a body controller through a conductive PIN, and the body controller controls the operation of the heating wire based on the vehicle speed, outside temperature and thermistor.

However, both of these methods have relatively high complexity and cost in structure and arrangement, and the insert injection molding solution will cause appearance shrinkage defects. In addition, both solutions require an ECU (Electronic Control Unit) for feedback control, making the control logic complex and prone to misjudgment, incorrect judgment or missed judgment, resulting in a higher frequency of failure.

Therefore, it is necessary to develop a physical structure that can realize overheat protection to avoid or reduce the process of program-based judgment.

### Summary of the Invention

The objective of the present invention is to address at least one of the above-mentioned issues by providing a radar heating cover with a bimetallic strip overheat protector and an automobile, in order to solve the unreliability issue in the existing technologies that rely on electronic control systems for achieving overheat protection. The present solution achieves overheat protection through a physical structure, which can automatically disconnect when the temperature exceeds an upper limit of a temperature range and automatically connect when the temperature returns to within the temperature range.

The objective of the present invention is achieved by the following technical solutions.

A first aspect of the present invention discloses a radar heating cover comprising a radar cover and a heating assembly:
- the heating assembly comprises a heating wire, a film and a bimetallic strip overheat protector;
- the heating wire is fitted into the film;
- the bimetallic strip overheat protector is connected in series in a heating circuit of the heating wire;
- the heating assembly is fitted onto the radar cover.

Preferably, the bimetallic strip overheat protector comprises a bimetallic strip switch and at least a pair of electrodes connected to the bimetallic strip switch, and the electrodes are connected in series in the heating circuit of the heating wire.

Preferably, the bimetallic strip switch is configured such that: when the temperature reaches a set protection temperature, the bimetallic strip switch automatically pops open, cutting off the power to the heating circuit; when the temperature falls back into a safe range, the bimetallic strip switch automatically resets, reconnecting the power to the heating circuit.

Preferably, the bimetallic strip overheat protector comprises a temperature sensing part in the middle, the bimetallic strip switch is arranged inside the temperature sensing part, and the electrodes extend outward from the temperature sensing part, for example two electrodes extend outward from both sides of the temperature sensing part.

Preferably, the temperature sensing part is in close proximity to the film through thermally conductive silicone grease.

Preferably, the bimetallic strip overheat protector is welded to the heating wire through the electrodes.

Preferably, at least a pair of apertures are formed in the film, through which the heating wire is arranged to pass, and the electrodes are welded to the heating wire at the apertures.

Preferably, the electrodes are symmetrically arranged relative to the bimetallic strip overheat protector.

Preferably, the heating assembly further comprises a protector cover, which is assembled on the outside of the bimetallic strip overheat protector and welded to the film. Further preferably, the protector cover is a waterproof and dustproof cover.

Preferably, the bimetallic strip overheat protector is snap-fitted inside the protector cover, ensuring the welding strength and sealing.

Preferably, the heating assembly further comprises a socket connector, which is welded to the film and connected to an end of the heating wire. Further preferably, the socket connector is connected to an external power supply circuit to supply power to the heating wire.

Preferably, the film is a PC film.

Preferably, the radar cover is a PC panel.

Preferably, the heating assembly is connected, in the form of an insert and through injection-molding, to the radar cover, forming an integrated structure.

A second aspect of the present invention discloses an automobile, wherein a radar heating cover as described in any of the above is assembled to a body of the automobile.

The working principle of the present invention is as follows.

An arrangement structure of a radar heating cover based on a bimetallic strip overheat protector provided by the present solution applies the principle of bimetallic strip deformation due to heat, so as to connect the overheat protector in series in the heating path, with a temperature probe area (such as an electrode end) of the overheat protector in close contact with the heating wire. When the temperature probed reaches a set protection temperature, the bimetallic strip switch in the overheat protector automatically pops open, cutting off the power to the entire heating circuit. When the temperature falls back into a safe range, the bimetallic strip switch automatically resets, reconnecting the power to the heating circuit.

Compared with the prior art, the present invention has advantageous effects as below.

An arrangement structure of a radar heating cover based on a bimetallic strip overheat protector of the present invention ensures the snow and frost removal function of the radar cover surface, while being able to automatically probe the temperature during abnormal heating and disconnect the circuit when a target temperature is exceeded, thereby protecting the components from damage.

The structure of the present invention ensures that the product achieves the snow and frost removal function through heating, while controlling to keep the heating temperature always below the material's failure temperature, thereby effectively protecting the components from damage.

The structure of the present invention can have a service life of over 100,000 cycles.

Due to the simple structure of the present invention, the on/off control of the heating circuit does not rely on external signal inputs, thereby significantly reducing the likelihood of errors.

### Brief Description of the Drawings

Figure 1 is a structure schematic illustration of a radar heating cover;
Figure 2 is a structure exploded schematic illustration of a radar heating cover;
Figure 3 is a structure sectional schematic illustration of the part of a bimetallic strip overheat protector.

In the figures: 1-radar cover; 2-heating wire; 3-film; 4-socket connector; 5-bimetallic strip overheat protector; 6-protector cover.

### Detailed Description of Preferred Embodiments

The present invention is described in detail below with reference to the accompanying drawings and specific embodiments.

### Embodiment 1

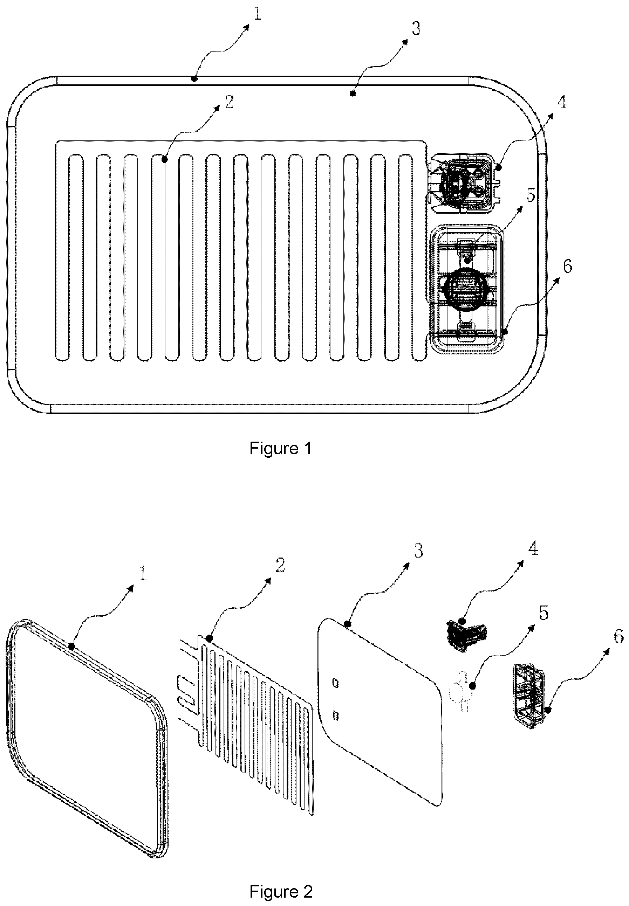

As shown in Figures 1 to 3, a radar heating cover with a bimetallic strip overheat protector 5 comprises a radar cover 1 and a heating assembly;
the heating assembly comprises a heating wire 2, a film 3 and a bimetallic strip overheat protector 5;
the heating wire 2 is fitted into the film 3;
the bimetallic strip overheat protector 5 is connected in series in a heating circuit of the heating wire 2;
the heating assembly is fitted onto the radar cover 1.

More specifically, in the present embodiment:
as shown in Figures 1 to 3, the radar heating cover consists of the radar cover 1 made of PC material and the heating assembly integrally injection molded onto the radar cover 1. The heating assembly further consists of the film 3 made of PC material, the heating wire 2, the bimetallic strip overheat protector 5, the socket connector 4, and the protector cover 6.

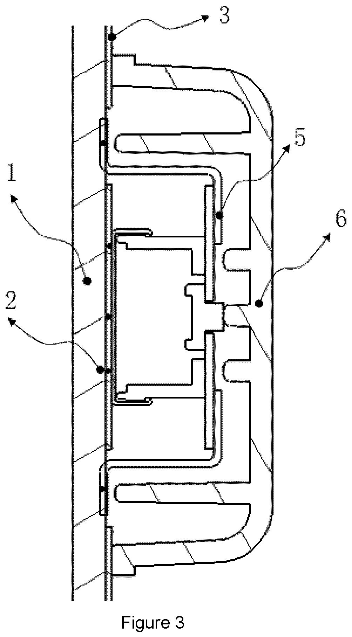

The heating wire 2 is embedded within the film 3. The bimetallic strip overheat protector 5 is welded to the heating wire 2 to be connected in series to the heating circuit comprising the heating wire 2. The bimetallic strip overheat protector 5 is assembled within the protector cover 6, and welded onto the film 3 in the form of an assembly. The protector cover 6 is located on the outside the bimetallic strip overheat protector 5 and is welded and fixed to the film 3, and the protector cover 6 and the bimetallic strip overheat protector 5 are assembled through snap-fitting. The bimetallic strip overheat protector 5 consists of a temperature sensing part in the middle and a pair of electrodes symmetrically arranged, each with one end connected to a bottom surface of the temperature sensing part. A bimetallic strip switch for realizing overheat protection is provided inside the temperature sensing part, and thermally conductive silicone grease is filled between a top surface of the temperature sensing part and the film 3. The electrodes extend outward from both sides of the temperature sensing part, each with one end connected to the bottom surface of the temperature sensing part and the bimetallic strip switch arranged between the two electrodes. The other end of each electrode extends in a Z-shape from an edge of the temperature sensing part, and is welded to the heating wire 2. As shown in Figures 2 and 3, apertures are provided on the film 3 at the positions where the bimetallic strip overheat protector 5 contacts the heating wire 2. The heating wire 2 passes through the apertures, and the electrodes on the bimetallic strip overheat protector 5 are welded to the heating wire 2 at the apertures, forming a series connection.

The protector cover 6 can be a waterproof and dustproof cover. Since it is connected to the film 3 through welding, its internal space can achieve an IP67 waterproof rating. This can thus reduce as much as possible the temperature difference between the bimetallic strip overheat protector 5 and the heating wire 2 (reducing energy dissipation) and enable effective waterproofing and dustproofing in the internal space, thereby improving the temperature measurement accuracy (enhancing on/off sensitivity) and also extending the service life (reducing environmental impact).

The socket connector 4 is welded onto the film 3 and electrically connected to one end of the heating wire 2, thereby allowing the socket connector 4 to be connected to an external power supply circuit to supply power to the heating wire 2.

The entire heating assembly is connected, in the form of an insert and through injection-molding, to the radar cover 1, forming an integrated structure.

In a specific manufacturing (assembly) process, the heating wire 2 is first embedded into the film 3, and the bimetallic strip overheat protector 5 and the protector cover 6 are welded together to the film 3 after being assembled together. Then the socket connector 4 is welded to the film 3 as well, forming the heating assembly. Finally, the formed heating assembly is injection-molded into the radar cover 1 in the form of an insert, forming the radar heating cover of the present embodiment.

The bimetallic strip overheat protector 5 operates independently and does not rely on the vehicle's ECU to achieve the on/off control of the heating circuit through temperature signals received from a temperature sensor. This avoids overheat protection failure caused by system errors, temperature sensor errors, or other factors.

The above-described bimetallic strip overheat protector 5 can be a commercially available product.

The above-mentioned heating circuit, external power supply circuit and other structures not specifically described can all adopt existing technologies.

### Embodiment 2

An automobile adopts a radar heating cover in Embodiment 1. Specifically, the radar heating cover is assembled on the vehicle body of the automobile and located in front of a radar emission direction. It is used to conceal and protect the radar while performing functions such as snow removal, ice removal, defrosting, and overheat protection.

The above description of embodiments is for the purpose of facilitating the understanding and use of the present invention by those skilled in the art. It is obvious that those skilled in the art can easily make various modifications to these embodiments and apply the general principles outlined herein to other embodiments without requiring inventive effort. Therefore, the present invention is not limited to the above embodiments, and any improvements or modifications made by those skilled in the art based on the disclosure of the present invention, without departing from the scope of the present invention, shall fall within the protection scope of the present invention.

## Claims

1. A radar heating cover, comprising a radar cover (1) and a heating assembly, **characterized in that**,
- the heating assembly comprises a heating wire (2), a film (3), and a bimetallic strip overheat protector (5);
- the heating wire (2) is fitted into the film (3);
- the bimetallic strip overheat protector (5) is connected in series in a heating circuit of the heating wire (2);
- the heating assembly is fitted onto the radar cover (1).

2. The radar heating cover according to claim 1, wherein the bimetallic strip overheat protector (5) comprises a bimetallic strip switch and at least a pair of electrodes connected to the bimetallic strip switch, and the electrodes are connected in series in the heating circuit of the heating wire (2).

3. The radar heating cover according to claim 2, wherein the bimetallic strip switch is configured such that: when the temperature reaches a set protection temperature, the bimetallic strip switch automatically pops open, cutting off the power to the heating circuit; when the temperature falls back into a safe range, the bimetallic strip switch automatically resets, reconnecting the power to the heating circuit.

4. The radar heating cover according to any one of claims 2 to 3, wherein the bimetallic strip overheat protector (5) comprises a temperature sensing part in the middle, the bimetallic strip switch is arranged inside the temperature sensing part, and the electrodes extend outward from the temperature sensing part.

5. The radar heating cover according to claim 4, the temperature sensing part is in close proximity to the film (3) through thermally conductive silicone grease.

6. The radar heating cover according to any one of claims 2 to 5, wherein the bimetallic strip overheat protector (5) is welded to the heating wire (2) through the electrodes.

7. The radar heating cover according to any one of claims 2 to 6, wherein at least a pair of apertures are formed in the film (3), the heating wire (2) is arranged to pass through the apertures, and the electrodes are welded to the heating wire (2) at the apertures.

8. The radar heating cover according to any one of claims 2 to 7, wherein the electrodes are symmetrically arranged relative to the bimetallic strip overheat protector (5).

9. The radar heating cover according to any one of claims 1 to 8, wherein the heating assembly further comprises a protector cover (6) which is assembled on the outside of the bimetallic strip overheat protector (5) and welded to the film (3), preferably the protector cover (6) is a waterproof and dustproof cover.

10. The radar heating cover according to claim 9, wherein the bimetallic strip overheat protector (5) is snap-fitted inside the protector cover (6).

11. The radar heating cover according to any one of claims 1 to 10, wherein the heating assembly further comprises a socket connector (4) which is welded to the film (3) and connected to an end of the heating wire (2), preferably the socket connector (4) is connected to an external power supply circuit to supply power to the heating wire (2).

12. The radar heating cover according to any one of claims 1 to 11, wherein the film (3) is a PC film.

13. The radar heating cover according to any one of claims 1 to 12, wherein the radar cover (1) is a PC panel.

14. The radar heating cover according to any one of claims 1 to 13, wherein the heating assembly is connected, in the form of an insert and through injection-molding, to the radar cover (1), forming an integrated structure.

15. An automobile, **characterized in that**, a radar heating cover according to any one of claims 1 to 14 is assembled on a body of the automobile.
